# EUROPEAN PATENT SPECIFICATION

(11) **EP 3 316 344 B1**
(45) Date of publication and mention of the grant of the patent: **26.09.2018**
(21) Application number: 16196688.2
(22) Date of filing: 01.11.2016
(51) Int. Cl.: H01M 2/10, H01M 10/04, H01M 10/42, H01M 10/6561, H01M 2/12, H01M 10/6563, H01M 10/6566, H01M 10/613

(54) **BATTERY MODULE**
BATTERIEMODUL
MODULE DE BATTERIE

(43) Date of publication of application: 02.05.2018
(73) Proprietor: Samsung SDI Co., Ltd., Giheung-gu Yongin-si, Gyeonggi-do 17084 (KR)
(72) Inventor: GOLUBKOV, Andrej, 8010 Graz (AT)
(74) Representative: Gulde & Partner

(56) References cited:
- EP-A1- 2 226 868
- US-A1- 2009 035 647
- US-A1- 2012 196 163

## Description

### Field of the Invention

The present invention relates to a battery module with a cooling gas inlet and a cooling gas valve configured for closing the cooling gas inlet in an abnormal operation condition of a battery cell of the battery module.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

In order to safely use the battery module, heat generated from the rechargeable battery should be efficiently emitted, discharged and/or dissipated. If the heat emission/discharge/dissipation is not sufficiently performed, a temperature deviation occurs between the respective unit batteries, such that the battery module cannot generate a desired amount of power for motor driving. In addition, when the internal temperature of the battery is increased due to the heat generated from the rechargeable battery, an abnormal operation condition of a battery cell can occur and thus charging and discharging performance of the rechargeable cell deteriorates and the life-span of the rechargeable battery is shortened.

A simple cooling system is air cooling, wherein a coolant gas stream, e.g. air stream, is lead to the battery cells in order to discharge heat from the cells. In mobile applications, e.g. in a vehicle comprising a battery module, preconditioned air from a passenger compartment might be used for cooling the battery cells. While the air is passing along the battery cells for cooling, exhaust gases from the battery cells can mix with the air stream, especially in an abnormal operation condition of the battery cells. Thus, a backflow of the cooling gas mixed with the exhaust gases of the batteries into the passenger compartment should be avoided.

An example of such abnormal operation condition is a thermal runaway of a battery cell that may be entered by strongly overheated or overcharged Lithium ion cell. The thermal runaway is a self-accelerating chemical reaction inside the cell, which produces high amounts of heat and gas, until all available material is exhausted. Due to high amounts of hydrogen and carbon monoxide, the produced gases may be toxic and flammable. It should be avoided that these harmful combustion gases enter the passenger compartment via a cooling gas inlet.

WO 2009/128214 A1 discloses a battery pack with air cooling, wherein an active exhaust of gases emitted by the battery cells shall be ensured by a cooling air flow that flows along the battery cells. In order to prevent uncontrolled flow of exhaust gases, a covering member is arranged upstream the battery cells in a cooling gas passage and is opened by the flow pressure of the cooling air flow. Thus, intrusion of exhaust gas in the cooling gas passage shall be avoided.

According to the prior art, blocking of a flow path of battery exhaust gases is sensitive to a cooling air flow but not to an abnormal operation condition of a battery cell. Thus, situations might still occur, wherein exhaust gases of a battery cell are lead into a passenger compartment.

It is thus an object of the present invention to overcome or reduce at least some of the drawbacks of the prior art and to provide a method for preventing an unwanted flow of exhaust gas that is sensitive to an abnormal operation condition of a battery cell itself.

### Summary of the Invention

Further aspects of the present invention will be apparent from the dependent claims, the attached drawings and/or the following description of the attached drawings.

According to a first aspect of the present invention a battery module is provided, comprising a plurality of aligned battery cells, each of the battery cells comprising an electrode assembly accommodated in a battery case, a cap assembly placed on the battery case and a gas exhaust vent. The battery module further comprises a cooling gas inlet for supplying cooling gas into the battery module and a cooling gas valve disposed in the cooling gas inlet. According to the present invention, the battery case of a battery cell, preferably of each battery cell of the plurality of battery cells, is configured to bulge before gas is exhausted through the gas exhaust vent in an abnormal operation condition of the battery cell. Further, a first side wall of the cooling gas inlet is configured to be deformed in response to a bulged battery case, preferably in response to a bulged battery case of any battery cell of the plurality of battery cells, and the cooling gas valve is configured to be closed by the deformed side wall of the cooling gas inlet.

It has been found by the inventors that battery cells, comprising a battery case and a cap assembly, show a characteristic behavior in an abnormal operation condition during which a high amount of exhaust gas is produced, e.g. in a thermal runaway. The gas exhaust vent of each battery cell is configured to open, i.e. to rupture, at a certain pressure inside the battery case. According to the invention, the gas exhaust vent is configured to open at a threshold pressure, wherein the battery case bulges, at an inside pressure below the threshold pressure. The bulging of the battery case is utilized to operate the cooling gas valve.

Thus, by configuring the battery case of a battery cell to bulge in an abnormal operation condition, e.g. by adapting the threshold pressure of the gas exhaust vent to the wall thickness of the battery case, by configuring a side wall of a cooling gas inlet to be deformed by the bulging battery case, e.g. by adapting the material and the wall thickness of the side wall, and by configuring the cooling gas valve to be closed by that deformed wall, a new and reliable operating mechanism for closing a cooling gas valve in an abnormal operation condition is provided that is directly sensitive to the abnormal operation condition of a battery cell.

Preferably, the battery cells are prismatic or rectangular battery cells, without restricting the scope of protection. Further preferred, the battery cells are aligned, e.g. stacked, in a first direction and are preferably arranged in a housing of the battery module. The battery module housing preferably encloses a coolant gas flow passage along an outer surface of the case of at least one of the plurality of battery cells, preferably along an outer surface of each of the plurality of battery cells. The coolant gas flow passage is configured for guiding the coolant gas flow along the battery cells in order to transport heat away from the battery cells.

The coolant gas inlet is configured for leading the coolant gas into the coolant gas flow passage and is preferably arranged in the battery module housing. Preferably, the coolant gas inlet is arranged adjacent to the plurality of battery cells in the first direction and is in close contact with at least one outermost battery cell. The cooling gas inlet comprises a first side wall and a second side wall, at least one of them facing a surface of a battery case of an outermost battery cell or being constituted by the surface of a battery case of an outermost battery cell. There may be two coolant gas inlets, each positioned next to one of the two outermost battery cells of the cell stack. The coolant gas inlet may be also positioned between sub-stacks of battery cells and one coolant gas inlet might comprise more than one coolant gas valves, wherein the valves may be positioned above each other in a flow direction of the coolant.

According to an embodiment of the present invention, the cooling gas valve is configured to let pass a cooling gas through the cooling gas inlet in a first position and during a normal operation condition of each of the plurality of battery cells. The closed cooling gas valve, i.e. the cooling gas valve closed by the deformed first side wall, is further configured to seal the deformed cooling gas inlet, i.e. the cooling gas inlet comprising the deformed first side wall, in a second position. In other words, the cooling gas valve has a first (operating) position and a second (operating) position and is transferred from the first position in the second position by the deformed first side wall of the cooling gas inlet in response to a bulged battery case.

The transfer of the cooling gas valve might preferably occur due to a mechanical interaction between the deformed or deforming first side wall and at least a part of the cooling gas valve. Further preferred, the cooling gas valve is constructed such that the deformation of the first side wall pushes the cooling gas valve from its first into its closed second position. The deformation of the first side wall may occur due to a direct contact with a bulged battery case. The first side wall is then configured to be deformed by the bulged battery case, e.g. by choosing an appropriate wall thickness. Alternatively, the deformation of the first side wall may occur due to a displacement of a battery cell due to a contact with a bulged battery case of another battery cell. The first side wall is then configured, e.g. by choosing an appropriate wall thickness, to be deformed by a displaced battery cell, e.g. by a battery cell tilting against the first side wall. The contact between the bulged battery cell and the displaced battery cell may be a direct contact or might occur via a spacer positioned between neighboring battery cells.

Further preferred, the cooling gas valve is swiveable attached to a second side wall of the cooling gas inlet opposite to the first side wall and is configured to be swiveled from the first position into the second position by the deformed first side wall. Thereby, the second side wall is configured to stay essentially non-deformed during an abnormal operation condition of a battery cell. According to this embodiment, the cooling gas valve comprises at least one portion, e.g. a second portion, that extends towards the first side wall and is in close contact with the first side wall during a normal operation condition of the battery cells, i.e. within a distance corresponding to an expected deformation of the first side wall in response to a bulged battery case. As the first side wall becomes deformed it pushes against that portion and thus swivels the cooling gas valve from the first into the second position by providing a torque relatively to the attachment point of the cooling gas valve on the second side wall. The second portion is thus an actuating portion configured to be pushed by the deformed first side wall and is preferably configured to let pass a cooling gas flow in each of its positions. The cooling gas valve further comprises at least one other portion, e.g. a first portion, that is configured to let pass the cooling gas flow in the first position of the valve and to block the gas flow in the second position of the valve. This portion is configured to be transferred into the second position as the deformed first side wall pushes the other, e.g. second, portion.

According to a particularly preferred embodiment, the cooling gas valve comprises an essentially L-shaped cross section, with a longer first portion and a shorter second portion that enclose an angle above 90°, preferably slightly above 90°. A connection line of the first portion and the second portion, i.e. the line at which the two portions meet, is swiveable attached to a second side wall of the cooling gas inlet opposite to the first side wall. In a first position of the coolant gas valve the first portion is essentially aligned with the second side wall and a peripheral edge of the second portion is positioned close to the first side wall. The cooling gas valve is configured to be swiveled around the connection line into a second position as the second portion is pushed by the deformed first side wall such that a peripheral edge of the first portion comes into contact with the first side wall.

In other words, in the first position the first portion is aligned essentially parallel to a flow direction of the coolant gas in the coolant gas inlet and the second portion is aligned with a small angle to a direction perpendicular to the flow direction of the coolant gas. In the second position, the first portion is aligned such that it crosses the flow direction of the coolant gas in the coolant gas inlet and a peripheral edge of the first portion touches the first side wall. In this preferred embodiment, the first portion is configured to cover the whole cross section of the cooling gas inlet in the second position of the coolant gas valve. In the essentially L-shaped cross section, the peripheral edges of the first portion or the second portion are defined as the outermost tip of the respective portion that is opposite to the connection line.

According to a particularly preferred embodiment, the first portion might comprise a solid metal sheet. The metal sheet might extend along the whole coolant gas inlet in a direction perpendicular of the drawing plane of the essentially L-shaped cross section. Thus, if the first portion extends from the connection line that is attached to the second side wall to the first side wall, the coolant gas inlet is blocked, i.e. the coolant gas stream cannot flow through it. Further preferred, the second portion comprises at least one perforation configured for letting pass a coolant gas. Particularly preferred, the second portion comprises a metal sheet that comprises at least one perforation for coolant gas flow passage. The perforation may be an internal perforation, i.e. surrounded the second portion on all sides, or may be open to one edge of the second portion, i.e. being not surrounded by the second portions on all sides. In the latter, the second portion might comprise multiple perforations and basically may consist of one or more studs extending from the connection line towards the first side wall of the coolant gas inlet.

Further preferred, a peripheral edge of the first portion and a peripheral edge of the second portion touch the deformed first side wall in the second position of the coolant gas valve. Thus, the cooling gas valve is clamped in its second position and thus blocked of any motion. The valve can then not swivel back towards the first position and leakage of exhaust gas can be avoided. Further preferred in this embodiment, the first portion and the second portion are elastically connected. Thus, a close contact of both peripheral edges with the first side wall can be ensured, while a breakage of the coolant gas valve can be avoided. This elastic connection might be inherently realized by the material of the coolant gas valve or might be realized by the type of connection or connection line between the first and second portion. According to one embodiment, the first portion and the second portion are welded together.

Further preferred in this embodiment, the first portion and the second portion enclose an angle between 90° and 120°, particularly preferred an angle between 93° and 110° and also preferred an angle between 95° and 100°. Such angle prevents the second portion to become blocked between the first and second side wall of the coolant gas inlet in the first position and ensures the swiveling of the second portion and the coolant gas valve from the first to the second position. Further, with an angle slightly above 90° the second portion must not be much larger than the width of the coolant gas inlet in order to have its peripheral edge in close contact with the first side wall in the first position of the cooling gas valve. Advantageously, the shorter the second portion is compared to the first portion, the smaller an angular displacement of the second portion must be in order to bring the peripheral edge of the first portion in contact with the first side wall in the second position of the cooling gas valve. In other words, the first portion and the second portion function can be seen as levers with the connection line being the fulcrum.

Further preferred in this embodiment, a peripheral edge of the second portion is friction reduced in order to allow for an easy swiveling of the cooling gas valve from a first position into a second position by the deformed first side wall. The reduced friction of the peripheral edge is realized by a friction-reduced coating, by ball bearings arranged at the peripheral edge of the second portion and/or by a rounded shape of the peripheral edge of the second portion. Further preferred for all embodiments, the coolant gas valve comprises an elastic element that is configured for keeping the first portion essentially aligned with the second side wall in the first position of the coolant gas valve. This elastic element might be a spring, e.g. a spiral spring, that is arranged at the connection line of the first portion and second portion.

In a further preferred embodiment of the battery module according to the present invention, the battery case of each of the aligned battery cells comprises a first wide side surface opposite to a second wide side surface and the plurality of battery cells is aligned such that wide side surfaces of neighboring battery cases are facing each other. In other words, the first direction (or arrangement direction) is a direction essentially parallel to a normal vector of a wide side surface. The battery cells might further comprise a top surface and a bottom surface opposite to the top surface and a first narrow side surface and a second narrow side surface opposite to the first narrow side surface. According to this embodiment, at least one side wall of the cooling gas inlet is facing a wide side surface of at least one outermost battery case. Alternatively, at least one side wall of the cooling gas inlet is constituted by a wide side surface of at least one outermost battery case. There may be a respective coolant gas inlet next to each of the two outermost battery cells or there may be a coolant gas inlet between two sub-stacks of battery cells. In the latter case there may be more than one coolant gas valve in the coolant gas inlet, e.g. two valves arranged above each other and swiveable connected to opposing side walls of the coolant gas inlet. As a single battery cell enters thermal runaway at a time, only one of the side walls will become deformed and thus only one of the coolant gas valves will be actuated at a time.

According to this embodiment, the wide side surfaces of the battery case of each of the plurality of battery cells are configured to bulge before gas is exhausted through the gas exhaust vent in an abnormal operation condition of the respective battery cell. In other words, the wide side surfaces of the battery cases are mechanical weak points of the battery cases and may be the only case surfaces to bulge in response to an increasing internal pressure.

Further preferred, the shortest distance between wide side surfaces of neighboring battery cells is less then the maximal deflection of a bulged wide side surface of a battery cell before gas is exhausted through the gas exhaust vent in an abnormal operation condition. The maximum deflection is the distance of an outermost point of a wide side surface in a direction parallel to a normal vector of that surface before and after bulging of the wide side surface. According to this embodiment, a bulging case may directly influence, e.g. tilt, a neighboring battery cell or may directly deform a first side wall of a cooling gas inlet. Further preferred, a peripheral edge of the second portion is positioned at the height of a point of maximum deflection of a bulged wide side surface of a battery cell. Thereby the influence of a bulging battery case on the second portion of the coolant gas valve is maximized and, as the peripheral edge of the second portion is an actuation mean for tilting the valve, a reliable tilting of the valve is achieved. The point of maximum deflection of a wide side surface is usually positioned halfway between the case upper surface and the opposite bottom surface.

Also preferred, spacers are arranged between the wide side surfaces of neighboring battery cells. Preferably, the spacer are mechanically stiff and can thus transfer the mechanical load of a bulging battery case onto a neighboring battery cell or a neighboring first side wall, e.g. by tilting of the spacers. Further preferred, the spacers comprise insulating surfaces in order to electrically insulate neighboring battery cells from each other. Preferably, the spacers comprise at least one cooling gas flow channel for a coolant gas flow. The cooling gas flow channels may be part of the coolant gas flow passage as introduced above.

### Brief Description of the Drawings

Features will become apparent to those of ordinary skill in the art by describing in detail exemplary embodiments with reference to the attached drawings in which:
- Fig. 1: illustrates a perspective view of a battery module according to an embodiment;
- Fig. 2: illustrates a cross section of a battery module according to an embodiment during a normal operation condition of the battery cells;
- Fig. 3: illustrates a cross section of a battery module according to an embodiment during an abnormal operation condition of a first battery cell; and
- Fig. 4: illustrates a cross section of a battery module according to an embodiment during an abnormal operation condition of a second battery cell.

### Detailed Description of the Invention

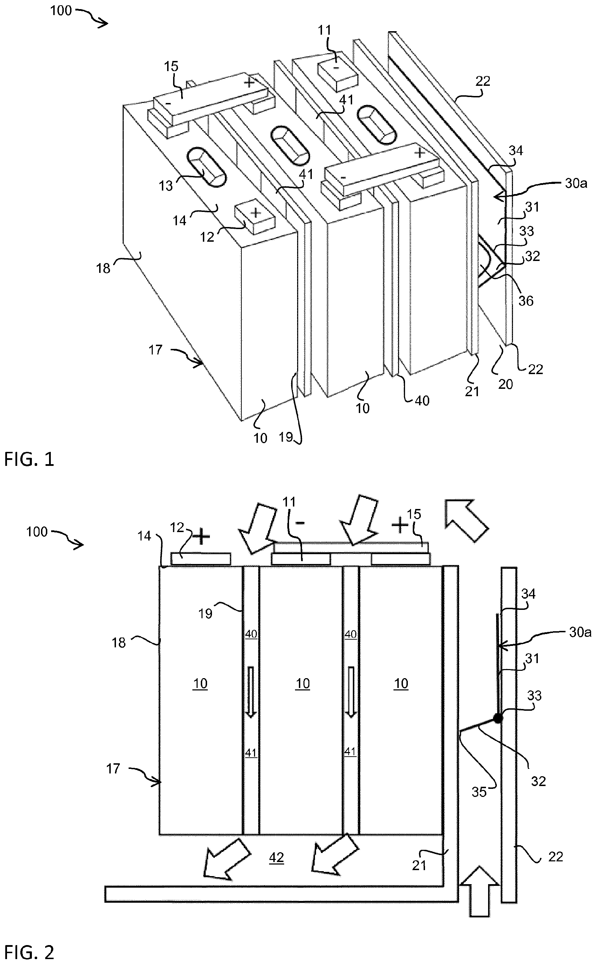

Referring to Fig. 1, an exemplary embodiment of a battery module 100 according to the invention includes a plurality of battery cells 10 arranged and aligned in a first direction. Each battery cell 10 is a prismatic (or rectangular) cell, the wide flat surfaces 18, 19 of the cells being stacked together to form the battery module 100. Further, each battery cell 10 includes a metal battery case 17 configured for accommodation of an electrode assembly and an electrolyte. The battery case 17 is hermetically sealed by a cap assembly 14. The cap assembly 14 is provided with positive and negative electrode terminals 11 and 12 having different polarities, and a gas exhaust vent 13. The gas exhaust vent 13 is a safety means of the battery cell 10, which acts as a passage through which gas generated in the battery cell 10 is exhausted to the outside of the battery cell 10. The gas exhaust vent 13 is configured to rupture open at a threshold pressure and the wide side surfaces 18, 19 of the battery cells 10 are configured to bulge at an internal pressure below that threshold pressure. The positive and negative electrode terminals 11 and 12 of neighboring battery cells 10 are electrically connected through a bus bar 15. The battery module 100 may be used as power source unit by electrically connecting the plurality of battery cells 10 as one bundle.

Generally, the battery cells 10 generate a large amount of heat while being charged/discharged. The generated heat is accumulated in the battery cells 10, thereby accelerating the deterioration of the battery cells 10. Therefore, the battery module 100 is provided with a coolant gas inlet 20 that is arranged adjacent to an outermost battery cell in the first direction. The coolant gas inlet 20 comprises a first side wall 21 that is facing a wide side surface 19 of the neighboring battery cell 10 and a second side wall 22 that is opposite to the first side wall 21. A coolant gas valve 30 is positioned in the coolant gas inlet 20. Rigid spacers 40 are interposed between the battery cells 10, wherein each spacer 40 comprises four cooling vertical gas flow channels 41. The battery cells 10 and the cooling gas inlet 20 are accommodated in a module casing (not shown).

Fig. 2 illustrates a cross section of a battery module 100 according to an embodiment during a normal operation condition of the battery cells 10. The function of the cooling gas valve 30 during a normal operation mode of the battery cells 10 is described in the following with respect to Figs. 1 and 2.

The cooling gas valve 30 comprises an essentially L-shaped cross section with a solid metal sheet as a first portion 31 and metal sheet comprising an internal perforation 36 as a second portion 32. The first portion 31 and the second portion 32 are welded together at a connection line 33 and enclose an angle of approximately 100°. The cooling gas valve 30 is swiveable connected to the second side wall 22 via the connection line 33. Therefore the connection line 33 can comprise a bearing (not shown) that houses a shaft (not shown) and is attached to the second side wall 22 or vice versa. A spiral spring (not shown) may be arranged in the bearing and is configured to keep the first portion 31 essentially parallel to the second side wall 22. In this first position 30a of the cooling gas valve 30, a peripheral edge 35 of the second portion 32 is positioned in close contact to the first side wall 21.

During a normal operation condition of each of the plurality of battery cells 10, a cooling gas flow, e.g. preconditioned air from a passenger compartment of a vehicle, is flowing upwardly in the coolant gas inlet 20. The cooling gas passes the second portion 32 of the cooling gas valve 30 in the first position 30a via the perforation 36. The cooling gas inlet 20 is continuous with the coolant gas passage 42, comprising a first compartment above the battery cells 10 and a second compartment below the battery cells 10. From the coolant gas inlet 20, the coolant gas flows downwardly through the coolant gas channels 41 in the spacers 40 into the second compartment of the coolant gas passage. The heated coolant gas is then exhausted via a gas exhaust (not shown) in the lower left corner of the battery module housing (not shown). In Fig. 2 the coolant gas flow is indicated by arrows.

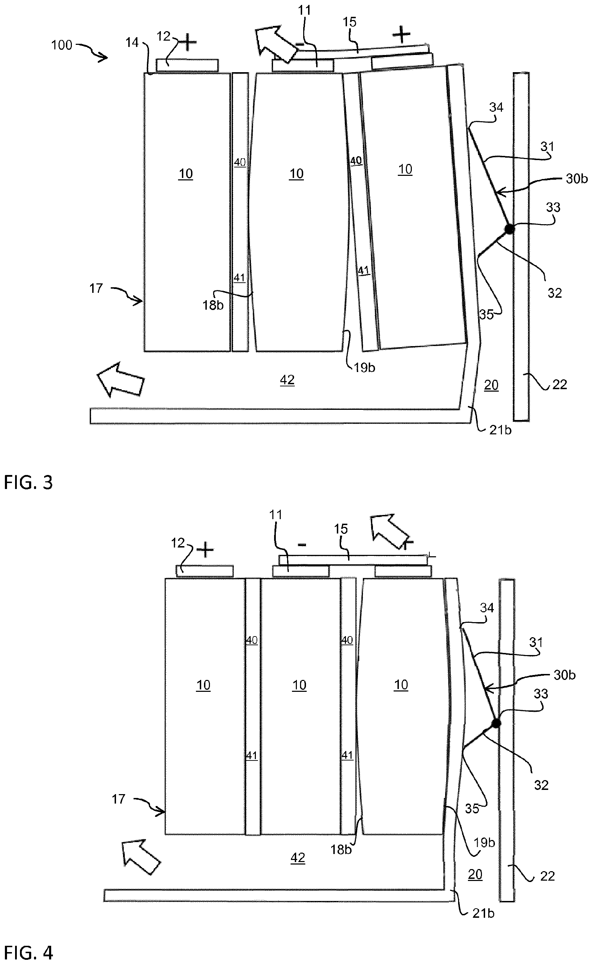

Fig. 3 illustrates a cross section of a battery module 100 according to an embodiment during an abnormal operation condition of a first battery cell 10 and Fig. 4 illustrates a cross section of a battery module 100 according to an embodiment during an abnormal operation condition of a second battery cell 10. The function of the cooling gas valve 30 during an abnormal operation mode of the battery cells 10 is described with respect to Figs. 3 and 4.

Fig. 3 shows that a central battery cell 10 in the middle of the plurality of battery cells 10 is in an abnormal operation mode, i.e. thermal runaway. Due to an excessive amount of gas produced in the battery cell 10, the battery case 17 of the middle cell 10 is bulged. Particularly, a first wide side surface 18b and a second wide side surface 19b are bulged with a maximum deflection halfway between the bottom of the case 17 and the cap assembly 14. Due to the bulged wide side surface 19a, an adjacent rigid spacer 40 and an adjacent outermost battery cell 10 are displaced, i.e. tilted, and thereby deform the first side wall 21b of the coolant gas inlet 20.

Fig. 4 shows that the an outermost battery cell 10 of the plurality of battery cells 10 is in an abnormal operation mode, i.e. thermal runaway. Due to an excessive amount of gas produced in the battery cell 10, the battery case 17 of the outermost cell 10 is bulged. The bulged wide side surface 19b is facing the first side wall 21 of the coolant gas inlet. The deflection of the first wide side surface 19b thus directly deforms the first side wall 21 of the coolant gas inlet 20 with a maximum deflection halfway between the bottom of the case 17 and the cap assembly 14 of the outermost battery cell 10.

In both cases of Figs. 3 and 4 the deformed first side wall 21 pushes the peripheral edge 35 of the second portion 32 of the coolant gas valve 30 towards the second side wall 22 and thus swivels the valve 30 from its first position 30a (see Fig. 2) into its second position 30b. As the peripheral edge 35 is positioned approximately at the height of a maximum deflection of the first wide side surface 19b of the bulged battery cell 10, the swiveling of the coolant gas valve 30 is reliably obtained.

In the second position 30b of the coolant gas valve 30 the peripheral edge 34 of the first portion 31 comes into contact with the first side wall 21b. The first portion 31 is a solid metal sheet and extends along the whole length of the coolant gas inlet 20 in a direction perpendicular to the drawing plane of Fig. 3. Thus, the first portion 31 covers the whole cross section of the cooling gas inlet 20 in the second position 30b of the coolant gas valve 30. If the inside pressure of the bulged central battery cell 10 reaches a certain threshold pressure, the gas exhaust vent 13 ruptures open and the exhaust gas is released into the coolant gas passage 42. As the coolant gas inlet 20 is blocked by the coolant gas valve 30 in its second position 30b, the exhaust gas can be discharged only through the gas exhaust (not shown) of the battery module casing (not shown). Thus, a backflow of harmful exhaust gas in the passenger compartment of a car that is fluidly connected upstream to the coolant gas inlet 20 is avoided. In Figs. 3 and 4 the arrows indicate the flow direction of the battery exhaust gases.

### Reference signs

- 100: battery module
- 10: battery cell
- 11: first terminal
- 12: second terminal
- 13: gas exhaust vent
- 14: cap assembly
- 15: busbar
- 17: battery case
- 18: first wide side surface
- 18b: bulged first wide side surface
- 19: second wide side surface
- 19b: bulged second wide side surface

- 20: cooling gas inlet
- 21: first side wall
- 21b: deformed first side wall
- 22: second side wall

- 30: cooling gas valve
- 30a: first position
- 30b: second position
- 31: first portion
- 32: second portion
- 33: connection line
- 34: peripheral edge of first portion (first peripheral edge)
- 35: peripheral edge of second portion (second peripheral edge)
- 36: perforation

- 40: spacer
- 41: cooling gas flow channel
- 42: coolant gas flow passage

## Claims

1. A battery module (100), comprising:
a plurality of aligned battery cells (10), each of the battery cells (10) comprising an electrode assembly accommodated in a battery case (17), a cap assembly (14) placed on the battery case (17) and a gas exhaust vent (13);
a cooling gas inlet (20) for supplying cooling gas into the battery module (100); and
a cooling gas valve (30) disposed in the cooling gas inlet (20),
wherein the battery case (17) of a battery cell (10) is configured to bulge before gas is exhausted through the gas exhaust vent (13) in an abnormal operation condition of the battery cell (10),
wherein a first side wall (21) of the cooling gas inlet (20) is configured to be deformed in response to a bulged battery case (17a), and
wherein the cooling gas valve (30) is configured to be closed by the deformed side wall (21b) of the cooling gas inlet (20).

2. A battery module (100) according to claim 1,
wherein the cooling gas valve (30) is configured to let pass a cooling gas through the cooling gas inlet (20) in a first position (30a) during a normal operation condition of each of the plurality of battery cells (10), and
wherein the closed cooling gas valve (30b) is configured to seal the deformed cooling gas inlet (20b) in a second position.

3. A battery module (100) according to claim 1 or 2,
wherein the cooling gas valve (30) is swiveable attached to a second side wall (22) of the cooling gas inlet (20) opposite to the first side wall (21), and
wherein the cooling gas valve (30) is configured to be swiveled from a first position (30a) into a second position (30b) by the deformed first side wall (21b).

4. A battery module (100) according to claim 3,
wherein the second side wall (22) is configured to stay non-deformed during an abnormal operation condition of a battery cell (10).

5. A battery module (100) according to any one of the preceding claims,
wherein the cooling gas valve (30) comprises an essentially L-shaped cross section, with a longer first portion (31) and a shorter second portion (32) that enclose an angle above 90°,
wherein in a first position (30a) of the coolant gas valve (30) the first portion (31) is aligned with the second side wall (22) and a peripheral edge (35) of the second portion (32) is positioned close to the first side wall (21),
wherein a connection line (33) of the first portion (31) and the second portion (32) is swiveable attached to the second side wall (22) of the cooling gas inlet (20) opposite to the first side wall (21), and
wherein the cooling gas valve (30) is configured to be swiveled around the connection line (33) into a second position (30b) as the second portion (32) is pushed by the deformed first side wall (21b) such that a peripheral edge (34) of the first portion (31) comes into contact with the first side wall (21b).

6. A battery module (100) according to claim 5, wherein the first portion (31) is configured to cover the whole cross section of the cooling gas inlet (20) in the second position (30b) of the coolant gas valve (30).

7. A battery module (100) according to claim 5 or 6, wherein the first portion (31) comprises a solid metal sheet.

8. A battery module (100) according to any one of claims 5 to 7, wherein the second portion (32) comprises at least one perforation (36) configured for letting pas a coolant gas.

9. A battery module (100) according to any one of the claims 5 to 8, wherein a peripheral edge (34) of the first portion (31) and a peripheral edge (35) of the second portion (32) touch the deformed first side wall (21b) in the second position (30b) of the coolant gas valve (30).

10. A battery module (100) according to any one of the claims 5 to 9, wherein the first portion (31) and the second portion (32) are elastically connected.

11. A battery module (100) according to any one of claims 5 to 10, wherein the first portion (31) and the second portion (32) enclose an angle between 90° and 120°.

12. A battery module (100) according to any one of claims 5 to 11, wherein a peripheral edge (35) of the second portion (32) is friction reduced in order to allow for an easy swiveling of the cooling gas valve (30) from its first position (30a) into its second position (30b) by the deformed first side wall (21b).

13. A battery module (100) according to any one of the preceding claims, wherein the coolant gas valve (30) comprises an elastic element that is configured for keeping the first portion (31) aligned with the second side wall (22) in the first position (30a).

14. A battery module (100) according to one of the preceding claims,
wherein the battery case (17) of each of the aligned battery cells (10) comprises a first wide side surface (18) opposite to a second wide side surface (19),
wherein the plurality of battery cells (10) is aligned such that wide side surfaces (18, 19) of neighboring battery cases (17) are facing each other, and
wherein at least one side wall (21) of the cooling gas inlet (20) is facing a or is a wide side surface (19) of at least one outermost battery case (17).

15. A battery module (100) according to claim 14,
wherein the wide side surfaces (18, 19) of the battery cases (17) of each of the plurality of battery cells (10) are configured to bulge before gas is exhausted through the gas exhaust vent (13) in an abnormal operation condition of the respective battery cell (10).

16. A battery module (100) according to claim 15,
wherein the shortest distance between wide side surfaces (18, 19) of neighboring battery cells (10) is less than the maximal deflection of a bulged wide side surface (18a, 19a) of a battery cell (10) before gas is exhausted through the gas exhaust vent (13) in an abnormal operation condition.

17. A battery module (100) according to any one of claims 14 to 16,
wherein spacers (40) comprising at least one cooling gas flow channel (41) are arranged between the wide side surfaces (18, 19) of neighboring battery cells (10).

18. A battery module according to any one of the preceding claims, further comprising a coolant gas flow passage (42) along an outer surface of the case (17) of at least one of the plurality of battery cells (10),
wherein the coolant gas inlet (20) is configured for leading the coolant gas into the coolant gas flow passage (42).

19. A battery module (100) according to any one of claims 14 to 17 in combination with claim 5, wherein a peripheral edge (35) of the second portion (32) is positioned at the height of a point of maximum deflection of a bulged wide side surface (18a, 19a) of a battery cell (10).

## Patentansprüche

1. Ein Batteriemodul (100), aufweisend:
eine Vielzahl aufeinander ausgerichteter Batteriezellen (10), wobei jede der Batteriezellen (10) eine Elektrodenanordnung, die in einem Batteriegehäuse (17) aufgenommen ist, eine Deckanordnung (14), die auf dem Batteriegehäuse (17) angeordnet ist, und eine Gasauslassöffnung (13) aufweist;
ein Kühlgaseinlass (20) zum Zuführen von Kühlgas in das Batteriemodul (100); und
ein Kühlgasventil (30), das im Kühlgaseinlass (20) angeordnet ist, wobei das Batteriegehäuse (17) einer Batteriezelle (10) konfiguriert ist, um sich unter einer anormalen Betriebsbedingung der Batteriezelle (10) auszubauchen, bevor Gas durch die Gasauslassöffnung (13) ausgelassen wird,
wobei eine erste Seitenwand (21) des Kühlgaseinlasses (20) konfiguriert ist, um in Reaktion auf ein ausgebauchtes Batteriegehäuse (17a) verformt zu werden, und
wobei das Kühlgasventil (30) konfiguriert ist, um von der verformten Seitenwand (21b) des Kühlgaseinlasses (20) verschlossen zu werden.

2. Ein Batteriemodul (100) nach Anspruch 1,
wobei das Kühlgasventil (30) konfiguriert ist, um während einer normalen Betriebsbedingung jeder der Vielzahl der Batteriezellen (10) in einer ersten Position (30a) ein Kühlgas durch den Kühlgaseinlass (20) strömen zu lassen, und
wobei das geschlossene Kühlgasventil (30b) konfiguriert ist, um in einer zweiten Position den verformten Kühlgaseinlass (20b) abzudichten.

3. Ein Batteriemodul (100) nach Anspruch 1 oder 2,
wobei das Kühlgasventil (30) schwenkbar an einer zweiten Seitenwand (22) des Kühlgaseinlasses (20) gegenüber der ersten Seitenwand (21) befestigt ist, und
wobei das Kühlgasventil (30) konfiguriert ist, um von der verformten ersten Seitenwand (21b) von einer ersten Position (30a) in eine zweite Position (30b) geschwenkt zu werden.

4. Ein Batteriemodul (100) nach Anspruch 3,
wobei die zweite Seitenwand (22) konfiguriert ist, um während einer anormalen Betriebsbedingung einer Batteriezelle (10) unverformt zu bleiben.

5. Ein Batteriemodul (100) nach einem der vorhergehenden Ansprüche,
wobei das Kühlgasventil (30) einen im Wesentlichen L-förmigen Querschnitt mit einem längeren ersten Abschnitt (31) und einem kürzeren zweiten Abschnitt (32), die einen Winkel über 90° einschließen, aufweist,
wobei in einer ersten Position (30a) des Kühlmittelgasventils (30) der erste Abschnitt (31) zur zweiten Seitenwand (22) ausgerichtet ist und ein Umfangsrand (35) des zweiten Abschnitts (32) nahe an der ersten Seitenwand (21) positioniert ist,
wobei eine Verbindungslinie (33) des ersten Abschnitts (31) und des zweiten Abschnitts (32) schwenkbar an der zweiten Seitenwand (22) des Kühlgaseinlasses (20) gegenüber der ersten Seitenwand (21) befestigt ist, und
wobei das Kühlgasventil (30) konfiguriert ist, um um die Verbindungslinie (33) herum in einer zweite Position (30b) geschwenkt zu werden, wenn der zweite Abschnitt (32) von der verformten ersten Seitenwand (21b) derart geschoben wird, dass ein Umfangsrand (34) des ersten Abschnitts (31) mit der ersten Seitenwand (21b) in Kontakt gelangt.

6. Ein Batteriemodul (100) nach Anspruch 5, wobei der erste Abschnitt (31) konfiguriert ist, um den gesamten Querschnitt des Kühlgaseinlasses (20) in der zweiten Position (30b) des Kühlmittelgasventils (30) zu bedecken.

7. Ein Batteriemodul (100) nach Anspruch 5 oder 6, wobei der erste Abschnitt (31) eine feste Metallplatte aufweist.

8. Ein Batteriemodul (100) nach einem der Ansprüche 5 bis 7, wobei der zweite Abschnitt (32) zumindest eine Durchlöcherung (36), die konfiguriert ist, um ein Kühlmittelgas hindurchströmen zu lassen, aufweist.

9. Ein Batteriemodul (100) nach einem der Ansprüche 5 bis 8, wobei ein Umfangsrand (34) des ersten Abschnitts (31) und ein Umfangsrand (35) des zweiten Abschnitts (32) in der zweiten Position (30b) des Kühlmittelgasventils (30) die verformte erste Seitenwand (21b) berühren.

10. Ein Batteriemodul (100) nach einem der Ansprüche 5 bis 9, wobei der erste Abschnitt (31) und der zweite Abschnitt (32) elastisch verbunden sind.

11. Ein Batteriemodul (100) nach einem der Ansprüche 5 bis 10, wobei der erste Abschnitt (31) und der zweite Abschnitt (32) einen Winkel zwischen 90° und 120° einschließen.

12. Ein Batteriemodul (100) nach einem der Ansprüche 5 bis 11, wobei ein Umfangsrand (35) des zweiten Abschnitts (32) reibungsreduziert ist, um durch die verformte erste Seitenwand (21b) ein einfaches Schwenken des Kühlgasventils (30) von seiner ersten Position (30a) in seine zweite Position (30b) zu ermöglichen.

13. Ein Batteriemodul (100) nach einem der vorhergehenden Ansprüche, wobei das Kühlmittelgasventil (30) ein elastisches Element, das konfiguriert ist, um in der ersten Position (30a) die Ausrichtung des ersten Abschnitts (31) zur zweiten Seitenwand (22) beizubehalten, aufweist.

14. Ein Batteriemodul (100) nach einem der vorhergehenden Ansprüche,
wobei das Batteriegehäuse (17) jeder der aufeinander ausgerichteten Batteriezellen (10) eine erste breite Seitenfläche (18) gegenüber einer zweiten breiten Seitenfläche (19) aufweist,
wobei die Vielzahl der Batteriezellen (10) derart ausgerichtet ist, dass breite Seitenflächen (18, 19) benachbarter Batteriegehäuse (17) einander zugewandt sind, und
wobei zumindest eine Seitenwand (21) des Kühlgaseinlasses (20) einer breiten Seitenfläche (19) zumindest eines äußersten Batteriegehäuses (17) zugewandt ist oder diese ist.

15. Ein Batteriemodul (100) nach Anspruch 14,
wobei die breiten Seitenflächen (18, 19) der Batteriegehäuse (17) jeder der Vielzahl der Batteriezellen (10) konfiguriert sind, um sich unter einer anormalen Betriebsbedingung der jeweiligen Batteriezelle (10) auszubauchen, bevor Gas durch die Gasauslassöffnung (13) ausgelassen wird.

16. Ein Batteriemodul (100) nach Anspruch 15,
wobei der kürzeste Abstand zwischen breiten Seitenflächen (18, 19) benachbarter Batteriezellen (10) kleiner ist als die maximale Auslenkung einer ausgebauchten breiten Seitenfläche (18a, 19a) einer Batteriezelle (10) unter einer anormalen Betriebsbedingung, bevor Gas durch die Gasauslassöffnung (13) ausgelassen wird.

17. Ein Batteriemodul (100) nach einem der Ansprüche 14 bis 16,
wobei Abstandhalter (40), die zumindest einen Kühlgasströmungskanal (41) aufweisen, zwischen den breiten Seitenflächen (18, 19) benachbarter Batteriezellen (10) angeordnet sind.

18. Ein Batteriemodul nach einem der vorhergehenden Ansprüche, ferner aufweisend einen Kühlmittelgasströmungsdurchlass (42) entlang einer Außenfläche des Gehäuses (17) zumindest einer der Vielzahl der Batteriezellen (10),
wobei der Kühlmittelgaseinlass (20) konfiguriert ist, um das Kühlmittelgas in den Kühlmittelgasströmungsdurchlass (42) zu leiten.

19. Ein Batteriemodul (100) nach einem der Ansprüche 14 bis 17 in Kombination mit Anspruch 5, wobei ein Umfangsrand (35) des zweiten Abschnitts (32) auf der Höhe eines Punktes maximaler Auslenkung einer ausgebauchten breiten Seitenfläche (18a, 19a) einer Batteriezelle (10) positioniert ist.

## Revendications

1. Module de batterie (100) comprenant :
une pluralité d'éléments de batterie alignés (10), chacun des éléments de batterie (10) comprenant un ensemble d'électrodes reçu dans un boîtier de batterie (17), un ensemble de capuchon (14) placé sur le boîtier de batterie (17) et un évent d'évacuation de gaz (13) ;
une entrée de gaz de refroidissement (20) pour fournir un gaz de refroidissement dans le module de batterie (100) ; et
une soupape à gaz de refroidissement (30) disposée dans l'entrée de gaz de refroidissement (20),
dans lequel le boîtier de batterie (17) d'un élément de batterie (10) est configuré pour se gonfler avant que le gaz ne soit évacué à travers l'évent d'évacuation de gaz (13) dans une condition de fonctionnement anormal de l'élément de batterie (10),
dans lequel une première paroi latérale (21) de l'entrée de gaz de refroidissement (20) est configurée pour être déformée en réponse à un boîtier de batterie gonflé (17a), et
dans lequel la soupape à gaz de refroidissement (30) est configurée pour être fermée par la paroi latérale déformée (21b) de l'entrée de gaz de refroidissement (20).

2. Module de batterie (100) selon la revendication 1,
dans lequel la soupape à gaz de refroidissement (30) est configurée pour laisser passer un gaz de refroidissement à travers l'entrée de gaz de refroidissement (20) dans une première position (30a) pendant une condition de fonctionnement normal de chacun de la pluralité d'éléments de batterie (10) ; et
dans lequel la soupape à gaz de refroidissement fermée (30b) est configurée pour sceller l'entrée de gaz de refroidissement déformée (20b) dans une deuxième position.

3. Module de batterie (100) selon la revendication 1 ou 2,
dans lequel la soupape à gaz de refroidissement (30) est fixée de manière pivotante à une deuxième paroi latérale (22) de l'entrée de gaz de refroidissement (20) opposée à la première paroi latérale (21) et
dans lequel la soupape à gaz de refroidissement (30) est configurée pour pivoter d'une première position (30a) à une deuxième position (30b) par la première paroi latérale déformée (21b).

4. Module de batterie (100) selon la revendication 3, dans lequel la deuxième paroi latérale (22) est configurée pour rester non déformée pendant une condition de fonctionnement anormal d'un élément de batterie (10).

5. Module de batterie (100) selon l'une quelconque des revendications précédentes,
dans lequel la soupape à gaz de refroidissement (30) comprend une section transversale essentiellement en forme de L, avec une première partie plus longue (31) et une deuxième partie plus courte (32) qui forment un angle supérieur à 90°,
dans lequel dans une première position (30a) de la soupape à gaz de refroidissement (30), la première partie (31) est alignée avec la deuxième paroi latérale (22) et un bord périphérique (35) de la deuxième partie (32) est positionné près de la première paroi latérale (21),
dans lequel une ligne de raccordement (33) de la première partie (31) et de la deuxième partie (32) est fixée de manière pivotante à la deuxième paroi latérale (22) de l'entrée de gaz de refroidissement (20) opposée à la première paroi latérale (21), et
dans lequel la soupape à gaz de refroidissement (30) est configurée pour pivoter autour de la ligne de raccordement (33) à une deuxième position (30b) à mesure que la deuxième partie (32) est poussée par la première paroi latérale déformée (21b) de sorte qu'un bord périphérique (34) de la première partie (31) vienne en contact avec la première paroi latérale (21b).

6. Module de batterie (100) selon la revendication 5, dans lequel la première partie (31) est configurée pour recouvrir toute la section transversale de l'entrée de gaz de refroidissement (20) dans la deuxième position (30b) de la soupape à gaz de refroidissement (30).

7. Module de batterie (100) selon la revendication 5 ou 6, dans lequel la première partie (31) comprend une feuille de métal solide.

8. Module de batterie (100) selon l'une quelconque des revendications 5 à 7, dans lequel la deuxième partie (32) comprend au moins une perforation (36) configurée pour laisser passer un gaz de refroidissement.

9. Module de batterie (100) selon l'une quelconque des revendications 5 à 8, dans lequel un bord périphérique (34) de la première partie (31) et un bord périphérique (35) de la deuxième partie (32) touchent la première paroi latérale déformée (21b) dans la deuxième position (30b) de la soupape à gaz de refroidissement (30).

10. Module de batterie (100) selon l'une quelconque des revendications 5 à 9, dans lequel la première partie (31) et la deuxième partie (32) sont reliées de manière élastique.

11. Module de batterie (100) selon l'une quelconque des revendications 5 à 10, dans lequel la première partie (31) et la deuxième partie (32) forment un angle compris entre 90° et 120°

12. Module de batterie (100) selon l'une quelconque des revendications 5 à 11, dans lequel un bord périphérique (35) de la deuxième partie (32) est à friction réduite afin de permettre un pivotement facile de la soupape à gaz de refroidissement (30) de sa première position (30a) à sa deuxième position (30b) par la première paroi latérale déformée (21b).

13. Module de batterie (100) selon l'une quelconque des revendications précédentes, dans lequel la soupape à gaz de refroidissement (30) comprend un élément élastique qui est configuré pour maintenir la première partie (31) alignée avec la deuxième paroi latérale (22) dans la première position (30a).

14. Module de batterie (100) selon l'une des revendications précédentes,
dans lequel le boîtier de batterie (17) de chacun des éléments de batterie alignés (10) comprend une première surface latérale large (18) opposée à une deuxième surface latérale large (19),
dans lequel la pluralité d'éléments de batterie (10) est alignée de sorte que les surfaces latérales larges (18, 19) des boîtiers de batterie voisins (17) soient tournées l'une vers l'autre, et
dans lequel au moins une paroi latérale (21) de l'entrée de gaz de refroidissement (20) est tournée vers ou est une surface latérale large (19) d'au moins le boîtier de batterie (17) le plus à l'extérieur.

15. Module de batterie (100) selon la revendication 14, dans lequel les surfaces latérales larges (18, 19) des boîtiers de batterie (17) de chacun de la pluralité d'éléments de batterie (10) sont configurées pour se gonfler avant qu'un gaz ne soit évacué à travers l'évent d'évacuation de gaz (13) dans une condition de fonctionnement anormal de l'élément de batterie respectif (10) .

16. Module de batterie (100) selon la revendication 15, dans lequel la distance la plus courte entre les surfaces latérales larges (18, 19) des éléments de batterie voisins (10) est inférieure à la déflexion maximale d'une surface latérale large gonflée (18a, 19a) d'un élément de batterie (10) avant qu'un gaz ne soit évacué à travers l'évent d'évacuation de gaz (13) dans une condition de fonctionnement anormal.

17. Module de batterie (100) selon l'une quelconque des revendications 14 à 16,
dans lequel des entretoises (40) comprenant au moins un canal d'écoulement de gaz de refroidissement (41) sont agencées entre les surfaces latérales larges (18, 19) des éléments de batterie voisins (10).

18. Module de batterie selon l'une quelconque des revendications précédentes, comprenant en outre un passage d'écoulement de gaz de refroidissement (42) le long d'une surface externe du boîtier (17) d'au moins l'un de la pluralité d'éléments de batterie (10),
où l'entrée de gaz de refroidissement (20) est configurée pour conduire le gaz de refroidissement dans le passage d'écoulement de gaz de refroidissement (42).

19. Module de batterie (100) selon l'une quelconque des revendications 14 à 17 en combinaison avec la revendication 5, dans lequel un bord périphérique (35) de la deuxième partie (32) est positionné à la hauteur d'un point de déflexion maximale d'une surface latérale large gonflée (18a, 19a) d'un élément de batterie (10).
